# EUROPÄISCHE PATENTSCHRIFT

(11) **EP 3 666 433 B1**
(45) Veröffentlichungstag und Bekanntmachung des Hinweises auf die Patenterteilung: **27.09.2023**
(21) Anmeldenummer: 18212364.6
(22) Anmeldetag: 13.12.2018
(51) Int. Cl.: B23B 51/02, B24B 19/04, B24B 19/02, B23B 51/06

(54) **BOHRWERKZEUG**
DRILLING TOOL
OUTIL DE PERÇAGE

(43) Veröffentlichungstag der Anmeldung: 17.06.2020
(73) Patentinhaber: CERATIZIT Balzheim GmbH & Co. KG, 88481 Balzheim (DE)
(72) Erfinder: WALCHER, Rainer, 88481 Balzheim (DE); BENSADI, Nordine, 88481 Balzheim (DE)
(74) Vertreter: Ciesla, Dirk

(56) Entgegenhaltungen:
- EP-A2- 1 396 303
- WO-A1-95/04624
- DE-T2- 69 209 034
- DE-T2- 69 709 966

## Beschreibung

Die vorliegende Erfindung betrifft ein Bohrwerkzeug mit den Merkmalen des Oberbegriffs von Anspruch 1.

Gattungsgemäße Bohrwerkzeuge, insbesondere Spiralbohrer, umfassen einen zylindrischen Grundkörper, an welchem wendelförmig Stege und zwischen Stegen Spannuten ausgebildet sind. Der Winkel, in welchem die Spannuten zu einer Mittelachse des Spiralbohrers geneigt verläuft, ist der Drallwinkel (auch als Spiralwinkel bezeichnet) des Spiralbohrers. Der Drallwinkel kann über die Länge des Spiralbohrers veränderlich sein.

In der Regel weisen Spiralbohrer zwei wendelförmige Spannuten auf.

Die Spannuten ermöglichen einen Abtransport von Spänen.

Aus dem Stand der Technik ist es bekannt, die Spannuten eines Bohrwerkzeugs durch Aufschleifen zu vergrößern.

Eine so geschaffene Spanraumerweiterung schafft zusätzliches Volumen zur Aufnahme und Abtransport von Spänen. Spanraumerweiterung bedeutet allgemein, dass ein freier Querschnitt einer Spannut gegenüber dem eigentlichen Werkzeugschliff vergrößert wird.

Die EP1396303A2 (MITSUBISHI MATERIALS CORP - 10.03.2004) zeigt ein

Bohrwerkzeug nach dem Oberbegriff des Anspruchs 1 mit verdrallt verlaufenden Spannuten mit zwischen der Spannuten ausgebildeten, teilweise Führungsfasen aufweisenden Stegen mit einer Stegbreite, wobei in wenigstens eine der Spannuten wenigstens abschnittsweise eine Spanraumerweiterung zur Vergrößerung des Spanraums eingebracht ist, wobei die Stegbreite im Bereich der Spanraumerweiterung reduziert ist.

Die WO 95/04624 (Kennametal - 16.02.1995) zeigt einen Bohrer mit einer in Richtung Schaft zunehmender Spanraumerweiterung ("Aufweitung der Spannut").

Die DE69209034T2 (Sumitomo Electric - 02.10.2002) zeigt einen Bohrer mit Spannuten von in Richtung Schaft allmählich zunehmender Breite und allmählich abnehmendem Spiralwinkel.

Die DE69209034T2 (SANDVIK AB - 25.07. 1996) zeigt einen Bohrer, dessen Spannuten von einer ersten, die Späne formenden Zone in eine zweite, die Späne lediglich transportierende Zone mit einer größeren Breite oder einem größeren Querschnitt übergehen.

Aufgabe der vorliegenden Erfindung ist es, ein verbessertes Bohrwerkzeug anzugeben.

Die Aufgabe wird erfüllt durch ein Bohrwerkzeug mit den Merkmalen von Anspruch 1. Bevorzugte Weiterbildungen sind in den abhängigen Ansprüchen angegeben.

Das erfindungsgemäße Bohrwerkzeug ist so ausgebildet, dass zumindest über einen Teil des Schneidenabschnitts Führungsfasen ausgebildet sind und die Spanraumerweiterung, von der Bohrerstirn in Richtung Schaftabschnitt betrachtet, erst nach dem Bereich des Schneidenabschnitts einsetzt, an dem Führungsfasen ausgebildet sind. Es ist ferner vorgesehen, dass die Spanraumerweiterung einen Steg erfasst, sodass eine Stegbreite im Bereich der Spanraumerweiterung reduziert ist. In anderen Worten wird der Spanraum des Werkzeugs auf Kosten des Steges vergrößert. Der Steg ist also im Bereich der Spanraumerweiterung schmäler als in einem Abschnitt des Bohrwerkzeugs, in dem keine Spanraumerweiterung ausgebildet ist.

Spanraumerweiterungen aus dem Stand der Technik sind unter anderem als lokale Vertiefungen von Spannuten an deren Grund ausgebildet. Die Schaffung zusätzlichen Spanraums durch bekannte Spanraumerweiterungen ist in diesen Fällen dadurch limitiert, als der tragende Querschnitt des Bohrwerkzeugs, also der Kerndurchmesser, geschwächt wird.

Eine erfindungsgemäße Spanraumerweiterung erweitert eine Spannut hingegen lateral, indem eine Stegbreite reduziert wird. Zusätzlich kann natürlich auch weiterer Spanraum durch Vertiefung der Spannut an deren Grund erzeugt werden.

Die erfindungsgemäße Spanraumerweiterung begünstigt einen Abtransport von Spänen. Eine Verstopfungsneigung wird reduziert.

Bevorzugt sind Spanraumerweiterungen an allen Spannuten des Bohrwerkzeugs ausgebildet. Es kann natürlich auch vorgesehen sein, eine Spanraumerweiterung nur an einer Spannut auszubilden. Für eine gleichmäßige mechanische Belastung des Bohrwerkzeugs ist es aber günstiger, Spanraumerweiterungen an allen Spannuten vorzusehen.

Durch die Formänderung der Spannut durch die erfindungsgemäße Spanraumerweiterung erfahren die Späne eine Beschleunigung, was einen Spanbruch begünstigt.

Beschleunigung ist so zu verstehen, dass die Späne eine Impulsänderung erfahren. Die Impulsänderung tritt durch die erfindungsgemäße Ausgestaltung der Spanraumerweiterung vorwiegend als Veränderung der Bewegungsrichtung der Späne, also durch eine Spanumlenkung auf.

Ein Steg weist auf der in Drehrichtung liegenden Seite eine Nebenschneide auf. Die Verringerung der Stegbreite erfolgt bevorzugt auf der der Nebenschneide abgewandten Seite des Steges, damit die Form der Nebenschneide von der Spanraumerweiterung unbeeinflusst bleibt. Auf diese Weise ist ein sanfter Spanablauf gegeben.

In anderen Worten ist die gemäß dieser Weiterbildung die Spanraumerweiterung so ausgebildet, dass nur die einer Drehrichtung abgewandte Seite eines Steges von der Spanraumerweiterung erfasst ist.

Neben der erwähnten Spanumlenkung besteht ein weiterer Vorteil der Erfindung auch darin, dass eine deutliche Vergrößerung des Spanvolumens innerhalb eines kurzen Wegs geschaffen werden kann. Mit kurzem Weg ist gemeint, dass die Spanraumerweiterung entlang eines kleinen Winkelbereichs - bezogen auf einen Verlauf der wendelförmigen Spannuten - oder anders ausgedrückt, innerhalb einer kurzen Strecke - bezogen auf eine Längserstreckung des Bohrwerkzeugs - realisiert werden kann.

Besonders interessant ist das für Mikrobohrer, da hier die Spanräume entsprechend klein und kurz sind.

Bevorzugt vergrößert sich durch die Spanraumerweiterung ein Nutöffnungswinkel einer Spannut. Unter Nutöffnungswinkel wird im Rahmen dieser Anmeldung jener Winkel verstanden, den die gegenüberliegenden Flanken einer Spannut miteinander einschließen.

Bevorzugt ist vorgesehen, dass die Spanraumerweiterung, von der Bohrerstirn in Richtung Schaftabschnitt betrachtet, erst bei einem Abstand von der Bohrerstirn einsetzt. In anderen Worten kann also vorgesehen sein, dass der vordere Teil des Schneidenabschnitts keine Spanraumerweiterung aufweist. Bevorzugt beginnt die Spanraumerweiterung erst bei einem Abstand von der Bohrerstirn von größer oder gleich 1 x D, mit D ist der Bohrerdurchmesser. Der Vorteil dieser Weiterbildung ist, dass im besagten Teil des Schneidenabschnitts ohne Spanraumerweiterung die volle Stegbreite erhalten ist und das Bohrwerkzeug dadurch im Spanbildungsbereich robuster ist. Es hat sich gezeigt, dass der Abschnitt ohne Spanraumerweiterung nicht zu lang sein soll, da sonst die günstigen Effekte der daran anschließenden Spanraumerweiterung nicht zur vollen Entfaltung kommen. Als Richtwert konnte festgestellt werden, dass die Spanraumerweiterung höchstens bei einem Abstand von der Bohrerstirn von 8 x D einsetzen soll, da ansonsten die Späne zu lang werden.

Insbesondere bevorzugt sind Führungsfasen, von der Bohrerstirn in Richtung Schaftabschnitt betrachtet, bis zu einem Abstand von der Bohrerstirn von kleiner oder gleich 3 x D ausgebildet.

Insbesondere bevorzugt sind an einem Steg zwei Führungsfasen ausgebildet. Erfindungsgemäß ist vorgesehen, dass die Spanraumerweiterung, von der Bohrerstirn in Richtung Schaftabschnitt betrachtet, erst nach dem Bereich des Schneidenabschnitts einsetzen, an dem Führungsfasen ausgebildet sind. Dies hat den Vorteil, dass die Stege im Bereich der Führungsfasen ihre ursprüngliche Breite aufweisen, was günstig für eine Führung bzw. Abstützung des Bohrers ist.

Bevorzugt ist vorgesehen, dass die von der Spanraumerweiterung erzielte Erweiterung des Spanraums entlang der Bohrerlängsachse zunimmt.

Die Spanraumerweiterung muss also nicht konstant sein, sondern kann entlang der Bohrerlängsachse zunehmen. Aus mechanischen Gründen günstig ist es, wenn die Spanraumerweiterung kontinuierlich, also nicht sprunghaft zunimmt.

Bevorzugt ist vorgesehen, dass wobei die Zunahme der Spanraumerweiterung, bezogen auf einen Verlauf der Spannuten, innerhalb von kleiner oder gleich 360° erfolgt. Dies beschreibt die bereits erwähnte Ausprägung, dass die Spanraumerweiterung innerhalb eines kurzen Weges das gewünschte Maß erreicht. Bei 360° würde also innerhalb einer Umdrehung einer wendelförmigen Spannut die Spanraumerweiterung von einem Startwert auf das gewünschte Endmaß anwachsen.

Bezogen auf die Bohrerlängsachse kann die Vergrößerung der Spanraumerweiterung beispielsweise entlang einer projizierten Strecke von kleiner oder gleich 2,5 x dem Bohrerdurchmesser D erfolgen.

Bevorzugt ist vorgesehen, dass die Spanraumerweiterung entlang einer ersten projizierten Strecke in Richtung Schaftabschnitt zunimmt, um danach entlang einer zweiten projizierten Strecke in Richtung Schaftabschnitt konstant zu bleiben.

Bevorzugt ist die Spanraumerweiterung als Einschliff ausgebildet. Das heißt, die Spanraumerweiterung ist bevorzugt durch Schleifen eingebracht. Alternativ könnte Material durch andere Verfahren, wie etwa Laserablation, abgetragen werden.

Bevorzugt ist vorgesehen, dass die Spannut im Bereich der Spanraumerweiterung eine veränderliche Tiefe aufweist. Mit Tiefe ist ein Abstand von einer Mantelfläche des Bohrwerkzeugs zum Grund der Spannut gemeint. Bevorzugt kann die Tiefe in Richtung Schaftabschnitt zunehmen. Damit wird auch zum Ausdruck gebracht, dass die Tiefe und die laterale Abmessung der Spanraumerweiterung unabhängig voneinander variierbar sind.

Bevorzugt ist vorgesehen, dass wenigstens ein im Inneren des Bohrwerkzeugs verlaufender Kühlmittelkanal ausbildet ist. Über einen Kühlmittelkanal kann ein Kühl- / Schmiermittel an die Bohrerstirn gefördert werden. Damit wird die Funktion des Bohrwerkzeugs besonders vorteilhaft unterstützt, da das Kühl- / Schmiermittel einen Abtransport von Spänen bei verringerter Reibung weiter begünstigt. Somit wirken die Maßnahmen besonders vorteilhaft miteinander.

Bevorzugt ist das Bohrwerkzeug aus einem Verbundwerkstoff umfassend wenigstens einen Hartstoff und wenigstens eine Binderphase ausgebildet. Insbesondere ist das Bohrwerkzeug aus Hartmetall gefertigt. Unter Hartmetall wird vorliegend ein Verbundwerkstoff verstanden, bei dem harte Teilchen, die insbesondere durch Karbide, Karbonitride und/oder Oxokarbonitride der Elemente der Gruppen IVb bis Vlb des Periodensystems der Elemente gebildet sein können, in einer duktilen metallischen Matrix eingebettet sind, die insbesondere aus Co, Ni, Fe oder einer Legierung von diesen gebildet sein kann. In den meisten Fällen sind die harten Teilchen dabei zumindest überwiegend durch Wolframkarbid gebildet und die metallische Matrix besteht im Wesentlichen aus Kobalt.

Schutz wird auch begehrt für ein Verfahren nach Anspruch 13 zur Herstellung eines Bohrwerkzeugs nach Anspruch 1. Dazu ist vorgesehen, dass ein rotierendes Schleifwerkzeug zu Schaffung einer Spanraumerweiterung entlang der Spannuten bewegt wird, wobei eine Rotationsebene des Schleifwerkzeugs in einem Winkel zur Bohrerlängsachse geneigt ist, welcher Winkel größer ist als der Drallwinkel der entsprechenden Spannut. Das Schleifwerkzeug wird dabei so geführt, dass ein Materialabtrag an jenen Seiten der Stege erfolgt, die bezüglich einer Drehrichtung hinten liegen.

Die Erfindung wird anhand der Figuren näher erläutert. Darin zeigt:
- Fig. 1: ein nicht-erfindungsgemäßes Beispiel
- Fig. 2a-c: Querschnitte des Bohrwerkzeugs von Figur 1 an verschiedenen Stellen entlang der Längsachse
- Fig. 3: ein Bohrwerkzeug in einem Ausführungsbeispiel
- Fig. 4a-c: Querschnitte des Bohrwerkzeugs von Figur 3 an verschiedenen Stellen entlang der Längsachse
- Fig. 5a, 5b: Bohrwerkzeuge in weiteren Ausführungsbeispielen
- Fig. 6a-c: Querschnitte des Bohrwerkzeugs von Figur 5 an verschiedenen Stellen entlang der Längsachse
- Fig. 7, 8: fotografische Aufnahmen eines erfindungsgemäßen Bohrwerkzeugs

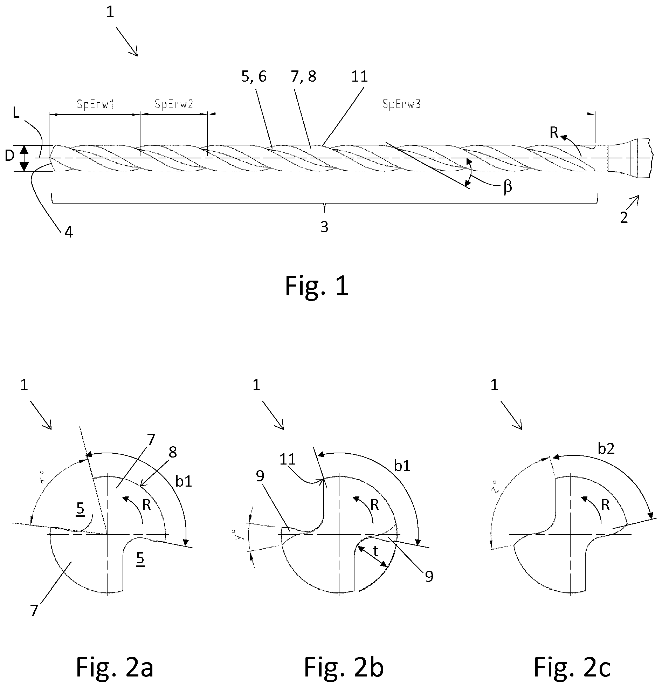

Figur 1 zeigt ein nicht-erfindungsgemäßes Bohrwerkzeug 1 als Spiralbohrer mit einem im Wesentlichen zylindrischen Grundkörper mit einem Bohrerdurchmesser D, der einen Schaftabschnitt 2 und einen Schneidenabschnitt 3 aufweist. Der Schaftabschnitt 2 ist nur ansatzweise dargestellt. In einem Einsatz rotiert das Bohrwerkzeug 1 in Drehrichtung R mit der Längsachse L als Rotationsachse. Das vorliegende Bohrwerkzeug 1 ist also rechtsdrehend ausgeführt.

Das Bohrwerkzeug 1 weist eine Bohrerstirn 4 (auch: Bohrerspitze) auf, an welcher Hauptschneiden ausgebildet sind.

Entlang des Bohrwerkzeugs 1 sind wendelförmig verlaufende Spannuten 5 eingeformt. Im vorliegenden Beispiel sind es zwei sich diametral gegenüberliegende Spannuten 5. Alternativ können Spannuten 5 auch asymmetrisch angeordnet sein. Es könnten auch mehr als zwei Spannuten 5 vorgesehen sein.

Die Spannuten 5 verlaufen in einem Drallwinkel β zur Längsachse L des Bohrwerkzeugs 1. Bevorzugt weisen beide Spannuten 5 den gleichen Drallwinkel auf.

Zwischen den Spannuten 5 besteht ein Steg 7. Die Oberfläche des Stegs 7, welche eine Mantelfläche des Bohrwerkzeugs 1 bestimmt, wird als Schneidrücken 8 bezeichnet.

Die von einer Spannut 5 und dem Steg 7 gebildete, in Drehrichtung R liegende Kante wird als Nebenschneide 11 bezeichnet.

Der Schneidenabschnitt 3 ist zur Erläuterung in drei Unterabschnitte eingeteilt: Entlang einer Strecke SpErw1 von der Bohrerstirn 4 ist keine Spanraumerweiterung 9 ausgebildet. Die Länge der ersten Strecke SpErw1 von der Bohrerstirn 4 ohne Spanraumerweiterung 9 ist bevorzugt größer gleich 1 x D, mit D Bohrerdurchmesser.

Nach der ersten Strecke SpErw1 beginnt eine Spanraumerweiterung 9, die entlang einer zweiten projizierten Strecke SpErw2 in Richtung Schaftabschnitt 3 zunimmt, um danach entlang einer dritten projizierten Strecke SpErw3 in Richtung Schaftabschnitt 3 konstant zu bleiben. Die Länge ersten Strecke SpErw1 beträgt im vorliegenden Beispiel 2,5 x D, die Länge der Strecke SpErw2 beträgt im vorliegenden Beispiel 2,6 x D.

In den Figuren 2a bis 2c darunter sind die zu den drei Unterabschnitten korrespondierenden Querschnitte des Bohrwerkzeugs 1 dargestellt.

Figur 2a zeigt einen Querschnitt des Bohrwerkzeugs 1 im Bereich der ersten Strecke SpErw1 ohne Spanraumerweiterung 9. Die Form und Tiefe der Spannuten 5 entspricht daher in dieser Darstellung dem ursprünglichen Werkzeugschliff.

Die Spannut 5 ohne Spanraumerweiterung 9 weist einen Nutöffnungswinkel von x°, in diesem Beispiel etwa 68° auf. Als Nutöffnungswinkel wird der Winkel zwischen den als strichlierte Hilfslinien eingezeichneten Schenkeln bezeichnet, welche ein Zentrum des Bohrwerkzeugs 1 und eine Kante zwischen der Spannut 5 und Schneidrücken 8 verbinden. Die Bezugszeichen sind in den nachfolgenden Figuren der Übersichtlichkeit halber nicht wiederholt.

Figur 2b zeigt einen Querschnitt des Bohrwerkzeugs 1 in einem Abstand SpErw1 von der Bohrerstirn 4. Strichliert angedeutet ist die Vergrößerung des Nutöffnungswinkels als Maß für die Spanraumerweiterung 9 entlang der Strecke SpErw2 um den Winkel y°, in diesem Beispiel 18°. Entlang der Strecke SpErw2 vergrößert sich der Spanraum der Spannut 5, ausgedrückt über den Nutöffnungswinkel, von einem Startwert von hier x° kontinuierlich, um am Ende der Strecke SpErw2 x° + y° = z° zu betragen.

Die Spanraumerweiterung 9 besteht in einer Materialabnahme an der der Drehrichtung (R) abgewandten Seite eines Steges 7, sodass eine Stegbreite b im Bereich der Spanraumerweiterung 9 reduziert ist. Der Steg ist also im Bereich der Spanraumerweiterung 9 schmäler als in einem Abschnitt des Bohrwerkzeugs 1, in dem keine Spanraumerweiterung 9 eingeformt ist.

Die Stegbreite b kann beispielsweise durch ein optisches Messverfahren ermittelt werden.

Die Kante zwischen dem Schneidrücken 8 und der Spannut 5 in Drehrichtung R trägt bildet eine Nebenschneide 11 des Bohrwerkzeugs 1 und bleibt von der Spanraumerweiterung 9 unbeeinflusst.

Alternativ könnte die Spanraumerweiterung 9 die Stege 7 auf beiden Seiten der Spannut erfassen. Allerdings ist es für einen sanften Spanablauf günstiger, wenn die Nebenschneide 11 von der Spanraumerweiterung 9 unberührt bleibt. Weiters ersichtlich ist eine Tiefe t der Spannut 5, die in diesem Beispiel unverändert bleibt.

Figur 2c zeigt einen Querschnitt des Bohrwerkzeugs 1 im Bereich des dritten Abschnittes SpErw3. Hier beträgt der Nutöffnungswinkel konstant z° mit z = 86°.

Man erkennt weiters, dass die Spanraumerweiterung 9 auf Kosten der Stege 7 auf der der Drehrichtung R abgewandten Seite erfolgt. Die Stegbreite b hat sich gegenüber dem Wert b1 von der Situation in Figur 2a auf den Wert b2 reduziert.

Eine Tiefe t der Spannuten 5 bleibt in diesem Beispiel unverändert. In anderen Worten reduziert sich ein Kerndurchmesser nicht. Es kann auch vorgesehen sein, zusätzlich zur beschriebenen lateralen Erweiterung der Spannuten auch noch die Tiefe t der Spannuten 5 zu vergrößern.

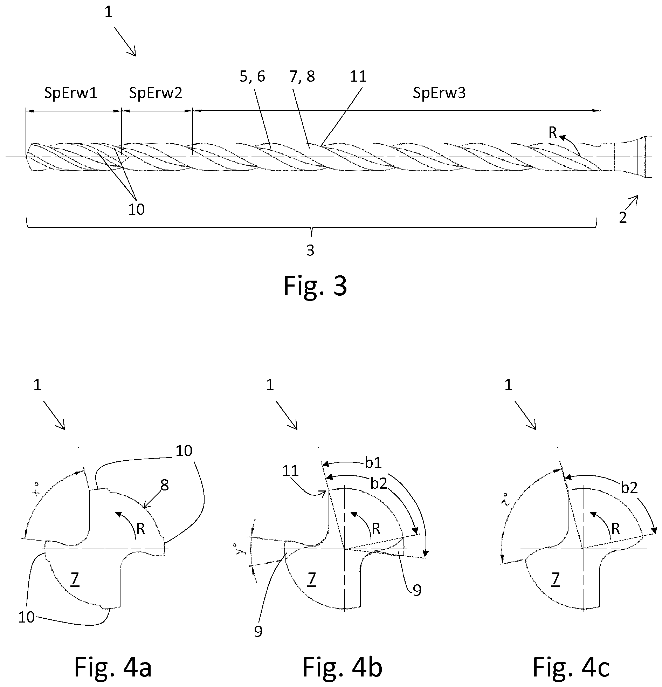

Figur 3 zeigt ein Bohrwerkzeug 1 nach einem Ausführungsbeispiel. Die Bezugszeichen entsprechen Figur 1. Im Unterschied zum Beispiel nach Figur 1 sind hier entlang der Strecke SpErw1 an den Stegen 7 Führungsfasen 10 ausgebildet. Führungsfasen 10 bewirken eine günstige Führung und Abstützung des Bohrwerkzeugs 1 bei geringer Reibung.

Die Führungsfasen 10 sind hier durch eine Ausnehmung am Schneidrücken 8 realisiert, sodass pro Steg 7 eine Führungsfase 10 an der Nebenschneide 11 und eine weitere Führungsfase 10 an der bezüglich der Drehrichtung R abgewandten Seite des Steges 7 vorliegt.

In diesem Ausführungsbeispiel setzt die Spanraumerweiterung 9 erst nach dem Abschnitt des Schneidenabschnitts 3 ein, an welchem die Führungsfasen 10 ausgebildet sind. Dies hat den Vorteil, dass die Stegbreite b im Bereich der Führungsfasen 10 unverändert breit ist, wodurch eine günstige Abstützung des Bohrwerkzeugs 1 erzielt wird. So erfolgt die Abstützung durch die Führungsfasen 10 über einen größeren Winkelbereich im Vergleich zu Führungsfasen 10 an einem Steg 7 mit verringerter Stegbreite b.

Aus Figur 4a gehen die Verhältnisse noch deutlicher hervor. Figur 4a zeigt einen Querschnitt des Bohrwerkzeugs 1 im Bereich der Strecke SpErw1, an der die Führungsfasen 10 ausgebildet sind. Man erkennt, dass die Führungsfasen 10 durch eine Ausnehmung am Schneidrücken 8 gebildet sind. Die Führungsfasen 10 sind in Winkelabständen von etwa 90° entlang des Umfangs des Bohrwerkzeugs 1 verteilt, wodurch eine gleichmäßige Abstützung und Führung des Bohrwerkzeugs 1 erreicht wird.

Die Länge der Strecke SpErw1, an der die Führungsfasen 10 ausgebildet sind, beträgt im vorliegen Beispiel 3,5 x dem Bohrerdurchmesser D.

Figur 4b zeigt einen Schnitt im Abschnitt SpErw2, in welchem die Spanraumerweiterung 9 einsetzt. Die Spanraumerweiterung 9 ist - wie auch im vorherigen Beispiel - so ausgeführt, dass die Stegbreite b an einem Steg 7 auf der in Drehrichtung 7 abgewandten Seite reduziert wird. In anderen Worten bleibt die Nebenschneide 11 von der Spanraumerweiterung 9 unberührt. Der Steg 7 wird also nicht von beiden Seiten in seiner Stegbreite b reduziert. Die Stegbreite b verringert sich entlang des Abschnitts SpErw2 vom ursprünglichen Wert b1 auf den Wert b2. Im Abschnitt SpErw2 sind keine Führungsfasen an den Stegen 7 ausgebildet.

Figur 4c zeigt einen Querschnitt des Bohrwerkzeugs 1 im Bereich des dritten Abschnittes SpErw3. Die Stegbreite b hat sich gegenüber dem Wert b1 von der Situation in Figur 4a auf den Wert b2 reduziert.

Für die Nutöffnungswinkel gilt das anhand der Figuren 2a-c diskutierte.

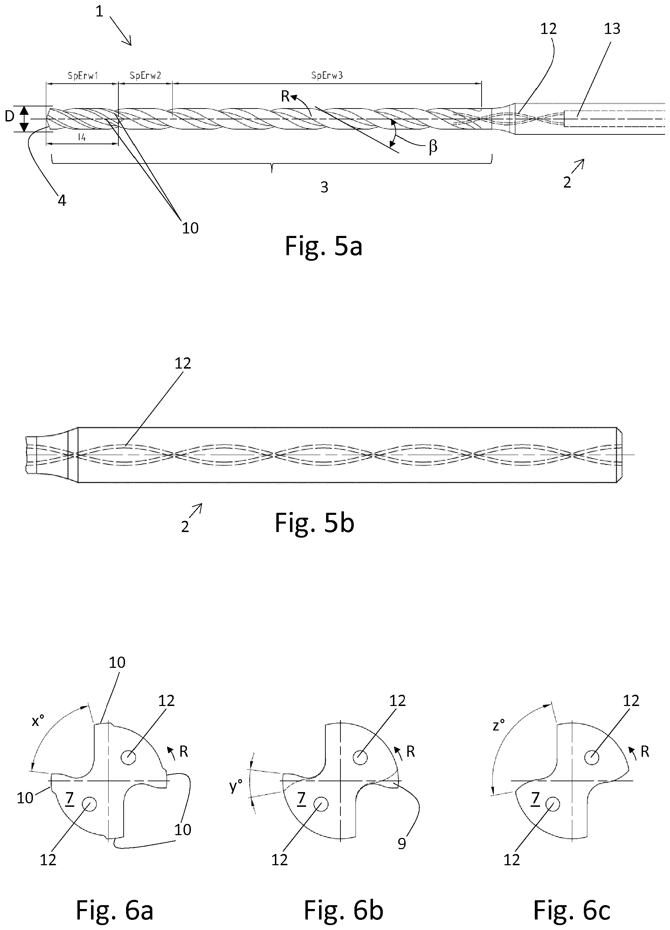

Figur 5a zeigt ein Bohrwerkzeug 1 nach einem weiteren Ausführungsbeispiel. Hier sind im Inneren des Bohrwerkzeug 1 verlaufende Kühlmittelkanäle 12 vorgesehen. Im Bereich der Strecke I4 sind Führungsfasen 10 ausgebildet. Bezüglich der übrigen Bezugszeichen gilt das für die vorherigen Ausführungsbeispiele gesagte.

Durch die Kühlmittelkanäle 12 kann ein Kühl- / Schmiermittel an die Bohrerstirn 4 gefördert werden. Die Kühlmittelkanäle 12 verlaufen verdrallt in einem Spiralwinkel zur Längsachse L.

Durch das über Kühlmittelkanäle 12 an die Bohrerstirn 4 förderbare Kühl- / Schmiermittel wird die Funktion des erfinderischen Bohrwerkzeugs 1 besonders vorteilhaft unterstützt, da das Kühl- / Schmiermittel einen Abtransport von Spänen weiter begünstigt.

Ferner ist im Schaftabschnitt 2 eine Verteilerkammer 13 für das Kühl- / Schmiermittel vorgesehen. Über die Verteilerkammer 13 kann das Kühl- / Schmiermittel von einer Einspannung (nicht gezeigt) vorteilhaft an das Bohrwerkzeug 1 übergeben werden. Diese Ausführungsform mit einer Verteilerkammer 13 ist insbesondere für besonders lange Werkzeuge und / oder Werkzeuge mit geringen Durchmessern interessant, um einen Strömungswiderstand für das Kühl- / Schmiermittel gering zu halten.

Figur 5b zeigt ein Detail eines Bohrwerkzeug 1 nach einem weiteren Ausführungsbeispiel. Hier ist im Unterschied zu dem Ausführungsbeispiel von Figur 5a im Schaftabschnitt 2 keine Verteilerkammer 13 vorgesehen. Vielmehr erstrecken sich die Kühlmittelkanäle 12 über die gesamte Länge des Bohrwerkzeugs 1.

Figuren 6a bis 6c zeigen Querschnitte von Bohrwerkzeugen 1 mit Kühlmittelkanälen 12.

Figur 6a zeigt einen Querschnitt des Bohrwerkzeugs 1 im Bereich der Strecke I4, entlang welcher die Führungsfasen 10 ausgebildet sind. Im Querschnitt des Bohrwerkzeugs 1 sind die innenliegenden Kühlmittelkanäle 12 zu erkennen. Die Kühlmittelkanäle 12 weisen in diesem Beispiel einen kreisförmigen Querschnitt auf.

Figur 6b zeigt einen Schnitt im Abschnitt SpErw2, in welchem die Spanraumerweiterung 9 einsetzt. Die Spanraumerweiterung 9 ist - wie auch in den vorherigen Ausführungsbeispielen - so ausgeführt, dass die Stegbreite b an einem Steg 7 auf der in Drehrichtung 7 abgewandten Seite reduziert wird. Günstig ist es, wenn die Kühlmittelkanäle 12 so angeordnet sind, dass ein ausreichender Abstand zur Spanraumerweiterung 9 bestehen bleibt, um den Steg 7 im Bereich der Kühlmittelkanäle 12 nicht zu schwächen.

Figur 6c zeigt einen Querschnitt des Bohrwerkzeugs 1 im Bereich des dritten Abschnittes SpErw3.

Das Vorhandensein von Kühlmittelkanälen 12 ist unabhängig von einem Vorhandensein von Führungsfasen 10. Es können also Bohrwerkzeuge 1 mit Kühlmittelkanälen 12 ohne Führungsfasen 10 bestehen.

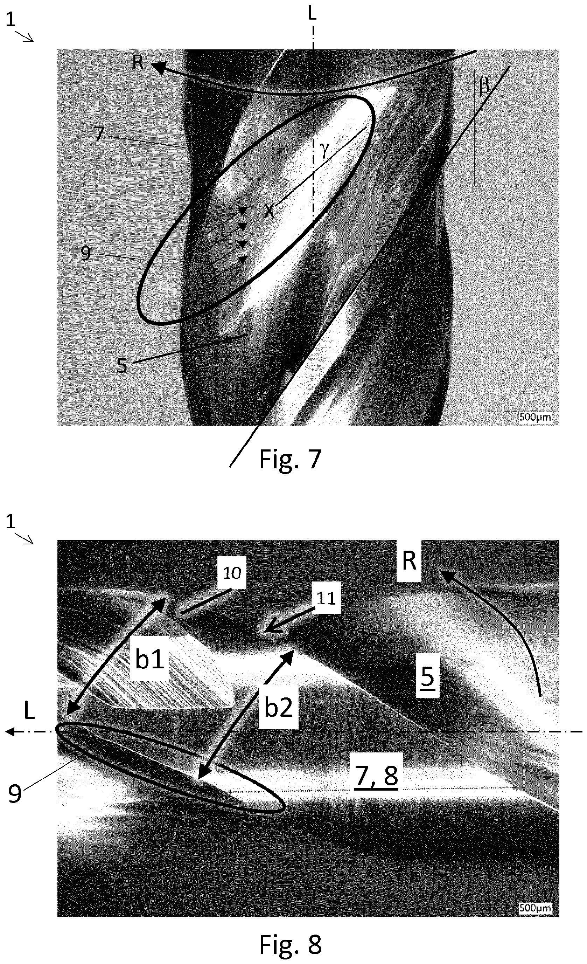

Figur 7 zeigt eine fotografische Aufnahme eines erfindungsgemäßen Bohrwerkzeugs 1. Hervorgehoben ist die Spanraumerweiterung 9, die auf Kosten der Stege 7 auf der der Drehrichtung R abgewandten Seite ausgebildet ist.

Durch Pfeile kenntlich gemacht sind Schleifriefen, welche durch einen Eingriff eines rotierenden Schleifwerkzeugs (nicht gezeigt), insbesondere einer Profilschleifscheibe erzeugt sind. Die durch den Eingriff des Schleifwerkzeugs erzeugte Spanraumerweiterung 9 weist eine Haupterstreckungsrichtung X auf, die in einem Winkel γ zur Bohrerlängsachse L verläuft, wobei der Winkel γ größer ist als der Drallwinkel β der entsprechenden Spannut 5.

Die Herstellung der Spanraumerweiterung 9 erfolgt bevorzugt durch einen Eingriff des Schleifwerkzeugs derart, dass eine Rotationsebene des Schleifwerkzeugs in einem Winkel γ zur Längsachse L des Bohrwerkzeugs 1 angestellt wird und dann der Spannut 5 folgend gegenüber dem Bohrwerkzeug 1 bewegt wird, sodass Stege 7 auf der der Drehrichtung R abgewandten Seite teilweise abgetragen werden.

Figur 8 zeigt eine weitere fotografische Aufnahme eines erfindungsgemäßen Bohrwerkzeugs 1. Zu erkennen ist, dass im Bereich der Spanraumerweiterung 9 eine Stegbreite b2 des Stegs 7 reduziert ist gegenüber einem Bereich in Längsrichtung davor mit einer Stegbreite b1.

### Liste der Bezugszeichen:

- 1: Bohrwerkzeug
- 2: Schaftabschnitt
- 3: Schneidenabschnitt
- 4: Bohrerstirn
- 5: Spannut
- 6: Spanraum
- 7: Steg
- 8: Schneidrücken
- 9: Spanraumerweiterung
- 10: Führungsfase
- 11: Nebenschneide
- 12: Kühlmittelkanal
- 13: Verteilerkammer
- D: Bohrerdurchmesser
- L: Längsachse
- R: Drehrichtung
- b: Stegbreite
- t: Tiefe der Spanraumerweiterung
- β: Drallwinkel
- γ: Winkel der Haupterstreckungsrichtung der Spanraumerweiterung

## Patentansprüche

1. Bohrwerkzeug (1), insbesondere Spiralbohrer, mit einem im Wesentlichen zylindrischen Grundkörper, umfassend einen Schaftabschnitt (2), einen Schneidenabschnitt (3) mit einem Bohrerdurchmesser (D),
eine Bohrerstirn (4), eine Bohrerlängsachse (L) um welche das Bohrwerkzeug in einer Drehrichtung (R) drehbar ist,
wenigstens zwei entlang der Bohrerlängsachse (L) in wenigstens einem Drallwinkel (β) geneigte, verdrallt verlaufende Spannuten (5), welche Spannuten (5) einen Spanraum (6) bilden, zwischen den Spannuten (5) ausgebildete Stege (7) mit einer Stegbreite (b), wobei in wenigstens eine der Spannuten (5) wenigstens abschnittsweise eine Spanraumerweiterung (9) zur Vergrößerung des Spanraums (6) eingebracht ist, wobei die Stegbreite (b) im Bereich der Spanraumerweiterung (9) reduziert ist, wobei zumindest über einen Teil des Schneidenabschnitts (3) Führungsfasen (10) ausgebildet sind, **dadurch gekennzeichnet, dass** die Spanraumerweiterung (9), von der Bohrerstirn (4) in Richtung Schaftabschnitt (2) betrachtet, erst nach dem Bereich des Schneidenabschnitts (3) einsetzt, an dem Führungsfasen (10) ausgebildet sind.

2. Bohrwerkzeug (1) nach Anspruch 1, wobei die Spanraumerweiterung (9) so ausgebildet ist, dass nur eine der Drehrichtung (R) abgewandte Seite eines Steges (7) von der Spanraumerweiterung (9) erfasst ist.

3. Bohrwerkzeug (1) nach Anspruch 1 oder 2, wobei sich durch die Spanraumerweiterung (9) ein Nutöffnungswinkel einer Spannut vergrößert.

4. Bohrwerkzeug (1) nach einem der vorangegangenen Ansprüche, wobei die Spanraumerweiterung (9), von der Bohrerstirn (4) in Richtung Schaftabschnitt (3) betrachtet, erst bei einem Abstand einer ersten projizierten Strecke (SpErw1) von der Bohrerstirn (4) von größer oder gleich 1 x Bohrerdurchmesser (D) einsetzt.

5. Bohrwerkzeug (1) nach einem der vorangegangenen Ansprüche, wobei die von der Spanraumerweiterung (9) erzielte Erweiterung des Spanraums (6) entlang der Bohrerlängsachse (L) zunimmt.

6. Bohrwerkzeug (1) nach Anspruch 5, wobei die Vergrößerung der Spanraumerweiterung (9), bezogen auf einen Verlauf der Spannuten (5), innerhalb von kleiner oder gleich 360° erfolgt.

7. Bohrwerkzeug (1) nach Anspruch 5 oder 6, wobei die die Vergrößerung der Spanraumerweiterung (9), bezogen auf die Bohrerlängsachse (L) entlang einer projizierten Strecke von kleiner oder gleich 2,5 x dem Bohrerdurchmesser (D) erfolgt.

8. Bohrwerkzeug (1) nach einem der vorangegangenen Ansprüche, wobei die Spanraumerweiterung (9) entlang einer zweiten projizierten Strecke (SpErw2) in Richtung Schaftabschnitt (3) zunimmt, um danach entlang einer dritten projizierten Strecke (SpErw3) in Richtung Schaftabschnitt (3) konstant zu bleiben.

9. Bohrwerkzeug (1) nach einem der vorangegangenen Ansprüche, wobei die Spanraumerweiterung (9) als Einschliff ausgebildet ist.

10. Bohrwerkzeug (1) nach einem der vorangegangenen Ansprüche, wobei eine Spannut (5) im Bereich der Spanraumerweiterung (9) eine veränderliche Tiefe (t) aufweist

11. Bohrwerkzeug (1) nach einem der vorangegangenen Ansprüche, wobei wenigstens ein im Inneren des Bohrwerkzeugs (1) verlaufender Kühlmittelkanal (12) ausbildet ist.

12. Bohrwerkzeug (1) nach einem der vorangegangenen Ansprüche, wobei das Bohrwerkzeug (1) aus Hartmetall ausbildet ist.

13. Verfahren zur Herstellung eines Bohrwerkzeugs (1) nach Anspruch 1, wobei ein rotierendes Schleifwerkzeug zur Schaffung einer Spanraumerweiterung (9) entlang von Spannuten (5) bewegt wird, **dadurch gekennzeichnet, dass** eine Rotationsebene des Schleifwerkzeugs in einem Winkel (γ) zur Längsachse (L) des Bohrwerkzeugs (1) geneigt ist, welcher Winkel (γ) größer ist als der Drallwinkel (β) der entsprechenden Spannut (5) und dass das Schleifwerkzeug so geführt wird, dass eine Stegbreite (b) im Bereich der Spanraumerweiterung (9) reduziert wird.

## Claims

1. A drilling tool (1), in particular a twist drill, having a substantially cylindrical main body, comprising a shank portion (2), a cutting-edge portion (3) having a drill diameter (D),
a drill end (4), a drill longitudinal axis (L) about which the drilling tool is rotatable in a direction of rotation (R),
at least two flutes (5) that extend in a twisted manner along the drill longitudinal axis (L) in a manner inclined at at least one helix angle (β), which flutes (5) form a chip space (6),
webs (7) formed between the flutes (5) with a web width (b),
wherein a chip space extension (9) for enlarging the chip space (6) has been introduced into at least part of at least one of the flutes (5),
wherein the web width (b) has been reduced in the region of the chip space extension (9), wherein margins (10) are formed at least over a part of the cutting-edge portion (3) **characterized in that** the chip space extension (9), as seen from the drill end (4) in the direction of the shank portion (2), starts only after the region of the cutting-edge portion (3) in which margins (10) are formed.

2. The drilling tool (1) as claimed in claim 1, wherein the chip space extension (9) is configured such that only a side of a web (7) that faces counter to the direction of rotation (R) is encompassed by the chip space extension (9).

3. The drilling tool (1) as claimed in claim 1 or 2, wherein a flute opening angle of a flute is increased by the chip space extension (9).

4. The drilling tool (1) as claimed in one of the preceding claims, wherein the chip space extension (9), as seen from the drill end (4) in the direction of the shank portion (3), starts only at a distance of a first projected segment (SpErw1) from the drill end (4) of greater than or equal to 1 x the drill diameter (D).

5. The drilling tool (1) as claimed in one of the preceding claims, wherein the extension, achieved by the chip space extension (9), of the chip space (6) increases along the drill longitudinal axis (L).

6. The drilling tool (1) as claimed in claim 5, wherein the enlargement of the chip space extension (9), with respect to a course of the flutes (5), occurs within less than or equal to 360°.

7. The drilling tool (1) as claimed in claim 5 or 6, wherein the enlargement of the chip space extension (9), with respect to the drill longitudinal axis (L), occurs along a projected segment of less than or equal to 2.5 x the drill diameter (D).

8. The drilling tool (1) as claimed in one of the preceding claims, wherein the chip space extension (9) increases along a second projected segment (SpErw2) in the direction of the shank portion (3), and then remains constant along a third projected segment (SpErw3) in the direction of the shank portion (3).

9. The drilling tool (1) as claimed in one of the preceding claims, wherein the chip space extension (9) is in the form of a ground-in portion.

10. The drilling tool (1) as claimed in one of the preceding claims, wherein a flute (5) has a variable depth (t) in the region of the chip space extension (9).

11. The drilling tool (1) as claimed in one of the preceding claims, wherein at least one coolant duct (12) extending inside the drilling tool (1) has been formed.

12. The drilling tool (1) as claimed in one of the preceding claims, wherein the drilling tool (1) is made from hard metal.

13. A method for producing a drilling tool (1) according to claim 1, wherein a rotating grinding tool for creating a chip space extension (9) is moved along flutes (5), **characterized in that** a plane of rotation of the grinding tool is inclined at an angle (γ) to the longitudinal axis (L) of the drilling tool (1), which angle (γ) is greater than the helix angle (β) of the corresponding flute (5), and **in that** the grinding tool is guided such that a web width (b) is reduced in the region of the chip space extension (9).

## Revendications

1. Outil de perçage (1), en particulier foret hélicoïdal, avec un corps de base essentiellement cylindrique, comprenant une partie de tige (2), une partie de coupe (3) avec un diamètre de foret (D), une face frontale (4) de foret, un axe longitudinal de foret (L) autour duquel l'outil de perçage est apte à tourner dans un sens de rotation (R),
au moins deux goujures (5) s'étendant de façon inclinée le long de l'axe longitudinal (L) du foret et s'étendant de façon hélicoïdale selon au moins un angle d'hélice (β), lesquelles goujures (5) forment un espace à copeaux (6), des bandes (7) formées entre les goujures (5) avec une largeur de bande (b), dans lequel, dans au moins l'une des goujures (5), une extension (9) de l'espace à copeaux est réalisée au moins par sections pour agrandir l'espace à copeaux (6), la largeur de l'âme (b) étant réduite dans la zone de l'extension (9) de l'espace à copeaux, des chanfreins de guidage (10) étant formés au moins sur une partie de la partie de coupe (3), **caractérisé en ce que** l'extension (9) de l'espace à copeaux, vue depuis la face frontale (4) de foret en direction de la partie de tige (2), ne commence qu'après la zone de la partie de coupe (3) sur laquelle sont formés les chanfreins de guidage (10).

2. Outil de perçage (1) selon la revendication 1, dans lequel l'extension (9) de l'espace à copeaux est réalisée de telle sorte que seul un côté d'une bande (7) opposé au sens de rotation (R) est recouvert par l'extension (9) de l'espace à copeaux.

3. Outil de perçage (1) selon la revendication 1 ou 2, dans lequel l'angle d'ouverture d'une goujure est augmenté par l'extension (9) de l'espace à copeaux.

4. Outil de perçage (1) selon l'une des revendications précédentes, dans lequel l'extension (9) de l'espace à copeaux, vue depuis la face frontale (4) de foret en direction de la partie de tige (3), ne commence qu'à une distance d'une première distance projetée (SpErw1) depuis la face frontale (4) de foret supérieure ou égale à 1 x le diamètre du foret (D).

5. Outil de perçage (1) selon l'une des revendications précédentes, dans lequel l'agrandissement de l'espace à copeaux (6) obtenu par l'extension (9) de l'espace à copeaux augmente le long de l'axe longitudinal (L) du foret.

6. Outil de perçage (1) selon la revendication 5, dans lequel l'augmentation de l'extension (9) de l'espace à copeaux, par rapport à un tracé des goujures (5), est inférieure ou égale à 360°.

7. Outil de perçage (1) selon la revendication 5 ou 6, dans lequel l'augmentation de l'extension (9) de l'espace à copeaux, par rapport à l'axe longitudinal du foret (L), s'effectue le long d'une distance projetée inférieure ou égale à 2,5 x le diamètre du foret (D).

8. Outil de perçage (1) selon l'une des revendications précédentes, dans lequel l'extension (9) de l'espace à copeaux augmente le long d'une deuxième distance projetée (SpErw2) en direction de la partie de tige (3), pour rester ensuite constant sur une troisième distance projetée (SpErw3) en direction de la partie de tige (3).

9. Outil de perçage (1) selon l'une des revendications précédentes, dans lequel l'extension (9) de l'espace à copeaux est réalisée sous la forme d'un meulage.

10. Outil de perçage (1) selon l'une des revendications précédentes, dans lequel une goujure (5) présente une profondeur (t) variable dans la zone de l'extension (9) de l'espace à copeaux.

11. Outil de perçage (1) selon l'une des revendications précédentes, dans lequel est formé au moins un canal (12) pour un agent de refroidissement s'étendant à l'intérieur de l'outil de perçage (1).

12. Outil de perçage (1) selon l'une des revendications précédentes, dans lequel l'outil de perçage (1) est réalisé en métal dur.

13. Procédé de fabrication d'un outil de perçage (1) selon la revendication 1, dans lequel un outil de meulage rotatif est déplacé le long de goujures (5) pour créer un extension (9) de l'espace à copeaux, **caractérisé en ce qu'**un plan de rotation de l'outil de meulage est incliné selon un angle (γ) par rapport à l'axe longitudinal (L) de l'outil de perçage (1), lequel angle (γ) est supérieur à l'angle d'hélice (β) de la goujure (5) correspondante et **en ce que** l'outil de meulage est guidé de telle sorte qu'une largeur de bande (b) est réduite dans la zone de l'extension (9) de l'espace à copeaux.
